# FASCICULE DE BREVET EUROPEEN

(11) **EP 1 507 680 B1**
(45) Date de publication et mention de la délivrance du brevet: **20.09.2006**
(21) Numéro de dépôt: 03755165.2
(22) Date de dépôt: 14.05.2003
(51) Int. Cl.: B60N 2/24

(54) **SIEGES POUR VEHICULE DE TRANSPORT EN COMMUN**
SITZE FÜR ÖFFENTLICHES VERKEHRSMITTEL
SEATS FOR PUBLIC TRANSPORT VEHICLE

(30) Priorité: 23.05.2002 FR 0206309
(43) Date de publication de la demande: 23.02.2005
(73) Titulaire: Compin, 27000 Evreux (FR)
(72) Inventeur: LEMAIRE, Géry, F-76190 Sainte-Marie-des-Champs (FR); THOUROULDE, Hubert, F-27800 Franqueville (FR)
(74) Mandataire: Ramey, Daniel
(86) Numéro de dépôt international: PCT/FR2003/001466
(87) Numéro de publication internationale: WO 2003/099606

(56) Documents cités:
- EP-A- 0 251 201
- DE-A- 4 316 930
- DE-A- 19 629 128
- FR-A- 2 135 828

## Description

L'invention concerne des sièges pour véhicules de transport en commun, notamment pour des voitures de chemin de fer, et qui sont également utilisables dans des véhicules d'un autre type, tels que des autocars, des tramways, des bateaux, etc.

Les sièges de ces véhicules sont le plus souvent fixés au sol, c'est-à-dire au plancher du véhicule, par des piétements et parfois également aux parois latérales du véhicule. Les piétements utilisés comprennent en général un cadre sensiblement horizontal qui est muni de pieds de fixation au sol et/ou de moyens de fixation sur les parois latérales du véhicule et qui supporte un ou plusieurs sièges. Ces piètements sont adaptés aux sièges qu'ils portent et tout changement de forme ou de dimension des sièges entraîne un changement correspondant des piétements.

Le document DE-A-196 29 128 décrit un siège pour véhicule de transport en commun correspondant au préambule de la revendication 1.

L'invention a notamment pour but de perfectionner les sièges de ce type, d'une façon permettant de standardiser leurs moyens de support et de fixation.

Elle propose à cet effet un siège pour véhicule de transport en commun, comprenant au moins une assise, un dossier et une structure sensiblement horizontale de support de l'assise, fixée à un mât sensiblement vertical destiné à être fixé au sol, et au moins un accessoire fixé ou intégré au mât, caractérisé en ce que le dossier est porté par une poutre sensiblement horizontale fixée au mât vertical et en ce que l'accessoire fixé ou intégré au mât est choisi dans le groupe comprenant au moins une tablette repliable, un accoudoir, un repose-pieds, une boîte à déchets, un vide-poche, des moyens de connexion à un réseau d'alimentation électrique et des moyens de connexion à des moyens de transmission de signaux audio et/ou vidéo.

Le mât est porteur et intègre au moins une partie des accessoires du siège. De plus, il est associable à tous les types de sièges et permet donc une standardisation des moyens de fixation des sièges au sol tout en assurant une diversité de styles ou de fonctionnalités des sièges.

La structure de support de l'assise est avantageusement une poutre horizontale qui s'étend au niveau de la partie inférieure de l'assise.

Dans une forme de réalisation préférée de l'invention, ce siège est double et comprend deux assises et deux dossiers fixés au mât, ce dernier s'étendant centralement entre les assises et entre les dossiers du siège double.

Dans ce cas, les deux assises peuvent être portées par une même structure de support horizontale s'étendant symétriquement de part et d'autre du mât, ou bien par deux structures de support s'étendant chacune d'un côté du mât.

De même, les dossiers peuvent être fixés sur une poutre horizontale qui s'étend de part et d'autre du mât, ou bien sur deux poutres horizontales qui s'étendent chacune d'un côté du mât.

Avantageusement, ce mât a une structure tubulaire et peut contenir des câbles électriques et/ou des conduits de passage de fluide sous pression.

Il peut également comporter des moyens de circulation d'air, de préférence par convection naturelle, pour le refroidissement des accessoires électriques qui sont intégrés à ce mât.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- les figures 1, 2 et 3 sont des représentations schématiques, de dos, de trois formes de réalisation d'un siège selon l'invention ;
- la figure 4 est une vue schématique partielle en perspective avant d'un siège selon l'invention ;
- la figure 5 est une vue schématique en perspective arrière d'un autre siège selon l'invention.

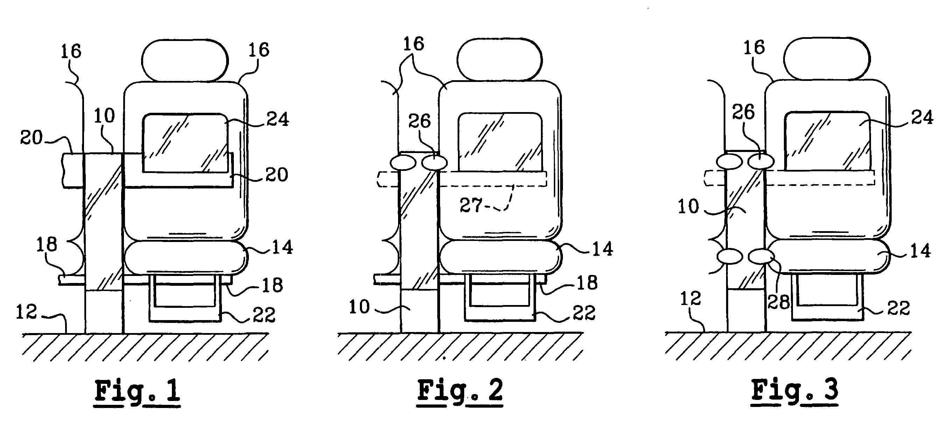

On se réfère d'abord aux figures 1 à 3 dans lesquelles on a représenté, de façon très schématique, trois modes de réalisation d'un siège selon l'invention.

En figure 1, la référence 10 désigne un mât central sensiblement vertical, qui est fixé au plancher 12 d'un véhicule par tout moyen approprié, par exemple par des vis ou des boulons.

Ce mât 10 s'étend de façon centrale entre deux sièges identiques comprenant chacun une assise 14 et un dossier 16, qui peuvent être solidaires l'un de l'autre ou indépendants l'un de l'autre.

La partie inférieure du mât 10 est solidaire d'une poutre horizontale 18 qui porte l'assise 14 du siège, cette assise comprenant une armature rigide au moyen de laquelle elle est fixée sur la poutre 18.

De même, le dossier 16 est fixé par son armature sur une poutre sensiblement horizontale 20 solidaire de la partie supérieure du mât 10.

Chaque poutre 18, 20 peut s'étendre de façon sensiblement symétrique de part et d'autre du mât 10 pour supporter les deux sièges. En variante, deux poutres 18 et 20 sont fixées sur un côté du mât 10 pour supporter l'assise et le dossier d'un siège, et deux autres poutres 18, 20 fixées sur l'autre côté du mât 10 pour supporter l'assise et le dossier de l'autre siège.

Comme représenté schématiquement en figure 1, la ou chaque poutre inférieure 18 supporte également un repose-pieds 22, qui est avantageusement relevable et la ou chaque poutre supérieure 20 supporte une tablette relevable et éventuellement coulissante 24. On comprend bien entendu que le repose-pieds 22 et la tablette 24 sont destinés à être utilisés par la personne se trouvant assise derrière le siège 14, 16 représenté en figure 1.

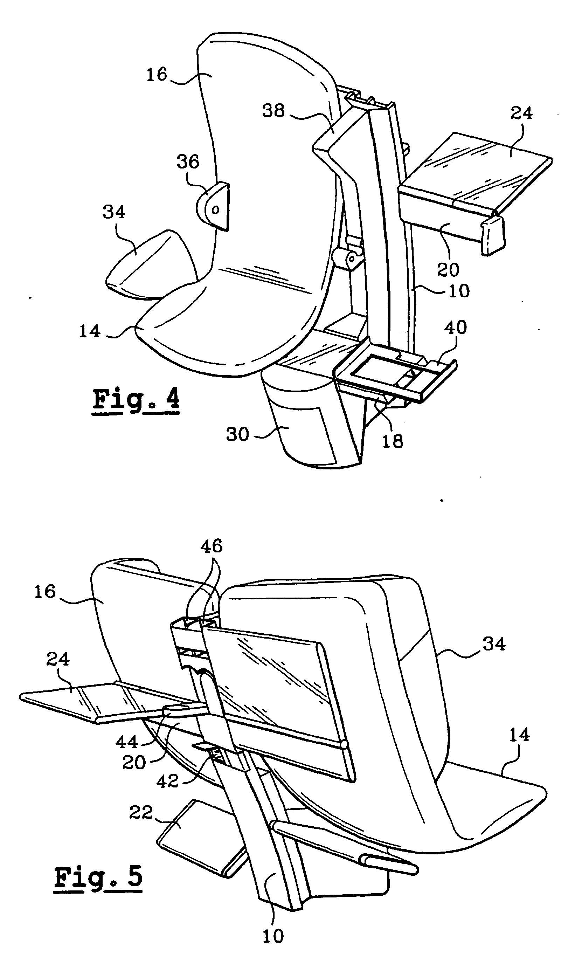

Dans la variante de réalisation représentée schématiquement en figure 2, les assises 14 des sièges sont fixées comme précédemment sur une poutre inférieure 18 qui porte également un repose-pieds 22 associé à chaque siège, mais le dossier 16 de chaque siège est fixé directement, par son armature, sur le mât central 10 comme représenté schématiquement en 26.

Dans ce cas, une tablette repliable 24 peut être portée par une barre horizontale 27 de l'armature du dossier 16.

Dans la variante de réalisation représentée schématiquement en figure 3, aussi bien l'assise 14 que le dossier 16 de chaque siège sont fixés directement sur le mât central 10, comme représenté schématiquement en 28 et en 26, respectivement.

Dans ce cas, un repose-pieds 22 peut être porté par la partie inférieure de l'armature de l'assise 14.

Le mât central 10 est de préférence constitué essentiellement par une poutre tubulaire, formée de pièces de fonderie en aluminium ou en magnésium par exemple. Il constitue une structure porteuse qui peut de plus intégrer un certain nombre d'accessoires, comme cela va être décrit ci-dessous en référence aux figures 4 et 5.

En figure 4, une boîte à déchets 30 est fixée sur le mât 10 ou sur la poutre inférieure horizontale 18 qui supporte les assises 14 des sièges, cette boîte 30 se trouvant donc entre les assises 14 et s'étendant entre le niveau du plancher 12 et la poutre inférieure 18.

La partie médiane du mât 10 porte des moyens 32 de support et d'articulation d'accoudoirs centraux (non représentés) qui sont avantageusement relevables. Des accoudoirs latéraux 34 sont montés relevables autour d'axes horizontaux sur une partie 36 de l'armature des dossiers 16 des sièges ou sur l'armature de chaque assise.

Les tablettes 24 précitées sont montées articulées autour d'axes horizontaux sur les poutres horizontales supérieures 20 sur lesquelles sont fixés les dossiers 16 des sièges. Ces tablettes sont éventuellement de plus mobiles en translation sur leurs moyens de support.

Le mât 10 comporte un rebord supérieur 38 en forme de coin, qui s'étend entre les parties supérieures des dossiers 16 des sièges et qui forme un appui-tête latéral.

Dans cet exemple de réalisation, le dossier 16 de chaque siège est articulé sur l'assise 14 et le mécanisme d'inclinaison du dossier est porté par les poutres inférieure 18 et supérieure 20.

On voit, en partie droite de la figure 4, un cadre horizontal 40 de support de l'assise 14 d'un siège, qui est fixé de façon mobile sur une partie d'extrémité de la poutre 18 pour l'inclinaison du siège.

En figure 5, on voit que des repose-pieds 22 relevables sont fixés directement sur la partie inférieure du mât 10.

La face arrière de ce mât comporte des prises électriques 42, équipées de couvercles pivotants. Ces prises sont raccordées à des câbles d'alimentation électrique qui se trouvent à l'intérieur du mât 10 et qui peuvent passer soit par le sol, soit par la poutre inférieure 18 vers une face latérale du véhicule.

Les tablettes relevables 24, qui se trouvent à l'arrière des sièges, sont fixées sur la poutre ou les poutres horizontales supérieures 20, et la face arrière du mât est équipée, au niveau des tablettes 24, de porte-gobelets 44 relevables.

A la partie supérieure du mât 10, sa face arrière est équipée de compartiments 46 servant de vide-poches et l'extrémité supérieure du mât 10 peut comporter des moyens de numérotation de place.

De plus, des moyens d'éclairage peuvent être intégrés en partie supérieure du mât 10, pour former des lampes individuelles de lecture, éclairant vers l'avant ou vers l'arrière du siège.

Le mât 10 peut encore comprendre des moyens de connexion à un circuit de transmission de signaux audio et/ou vidéo permettant le branchement d'écouteurs et/ou d'écrans de visualisation.

Avantageusement, des orifices de passage d'air sont prévus en partie inférieure et en partie supérieure du mât 10, pour permettre une circulation d'air par convection naturelle à l'intérieur du mât 10 et opérer un refroidissement des appareils électriques qui peuvent être intégrés dans ce mât.

Des conduites de passage de fluide sous pression, par exemple d'air comprimé, peuvent également être logées à l'intérieur du mât pour la commande d'équipements divers et passer par le sol ou par une poutre inférieure 18 et une face latérale du véhicule.

On voit bien, notamment en figure 4, que le mât 10 équipé des poutres 18 et 20 forme une structure porteuse sur laquelle on peut fixer des sièges ayant des formes, des dimensions et des fonctionnalités différentes.

Par ailleurs, on peut bien entendu équiper le mât 10 d'un seul siège, qui est alors fixé sur des poutres inférieure et supérieure qui s'étendent d'un seul côté du mât 10.

De plus, des accoudoirs peuvent être fixés sur la poutre inférieure 18 ou supérieure 20, et des moyens d'articulation et/ou de déplacement de l'assise peuvent être fixés sur la poutre inférieure 18 et éventuellement aussi sur la poutre supérieure 20.

## Revendications

1. Siège pour véhicule de transport en commun, comprenant au moins une assise (14), un dossier (16) et une structure (18) sensiblement horizontale de support de l'assise (14), fixée à un mât (10) sensiblement vertical destiné à être fixé au sol (12), et au moins un accessoire fixé ou intégré au mât (10), **caractérisé en ce que** le dossier (16) est porté par une poutre (20) sensiblement horizontale fixée au mât vertical (10) et **en ce que** l'accessoire fixé ou intégré au mât (10) est choisi dans le groupe comprenant au moins une tablette repliable (24), un accoudoir (34), un repose-pieds (22), une boîte à déchets (30), un vide-poche (46), des moyens (42) de connexion à un réseau d'alimentation électrique et des moyens de connexion à des moyens de transmission de signaux audio ét/ou vidéo.

2. Siège selon la revendication 1, **caractérisé en ce que** la structure (18) de support de l'assise (14) porte également un accoudoir.

3. Siège selon la revendication 1 ou 2, **caractérisé en ce que** la structure (18) de support de l'assise porte également des moyens d'articulation et/ou de déplacement de l'assise.

4. Siège selon l'une des revendications 1 à 3, **caractérisé en ce que** la poutre (20) de support du dossier (16) porte également un accessoire tel qu'une tablette (24) par exemple.

5. Siège selon l'une des revendications 1 à 4, **caractérisé en ce que** la structure de support de l'assise (14) est une poutre horizontale (18).

6. Siège selon l'une des revendications précédentes, **caractérisé en ce qu'**il forme un siège double comprenant deux assises (14) et deux dossiers (16) fixés au mât (10), celui-ci s'étendant centralement entre les assises et les dossiers, les assises étant portées par une même structure de support qui s'étend symétriquement de part et d'autre du mât ou par deux structures de support qui s'étendent chacune d'un côté du mât, les dossiers étant fixés sur une poutre horizontale qui s'étend de part et d'autre du mât ou sur deux poutres horizontales qui s'étendent chacune d'un côté du mât.

7. Siège selon l'une des revendications précédentes, **caractérisé en ce que** la partie supérieure du mât (10) comporte des moyens de numérotation de place et un rebord longitudinal orienté vers l'avant et formant appui-tête latéral.

8. Siège selon l'une des revendications précédentes, **caractérisé en ce que** le mât est formé d'une poutre tubulaire qui contient des câbles électriques et/ou des conduits de passage de fluide sous pression.

9. Siège selon l'une des revendications précédentes, **caractérisé en ce que** le mât est tubulaire et comporte des moyens de circulation d'air par convection naturelle, pour le refroidissement d'équipements électriques intégrés.

## Claims

1. A chair for a public transport vehicle, comprising at least one seat (14), a back (16) and a substantially horizontal structure (18) to support the seat (14), fixed to a substantially vertical strut (10) intended to be fixed to the ground (12), and at least one accessory fixed to or integral with the strut (10), **characterized in that** the back (16) is carried by a substantially horizontal spar (20) fixed to the vertical strut (10) and **in that** the accessory which is fixed to or integral with the strut (10) is selected from the group comprising at least one folding table (24), an arm rest (34), a foot rest (22), a trash can (30), a stowage compartment (46), means (42) for connection to an electrical supply and means for connection to means for transmitting audio and/or video signals.

2. A chair according to claim 1, **characterized in that** the structure (18) to support the seat (14) also carries an arm rest.

3. A chair according to claim 1 or claim 2, **characterized in that** the structure (18) to support the seat also carries means for articulating and/or displacing the seat.

4. A chair according to one of claims 1 to 3, **characterized in that** the spar (20) to support the back (16) also carries an accessory such as a table (24), for example.

5. A chair according to one of claims 1 to 4, **characterized in that** the structure to support the seat (14) is a horizontal spar (18).

6. A chair according to one of the preceding claims, **characterized in that** it forms a double chair comprising two seats (14) and two backs (16) fixed to the strut (10), the latter extending centrally between the seats and the backs, the seats being carried by the same support structure which extends symmetrically either side of the strut or by two support structures which extend one each side of the strut, the backs being fixed on a horizontal spar which extends either side of the strut or on two horizontal spars which extend one each side of the strut.

7. A chair according to one of the preceding claims, **characterized in that** the upper portion of the strut (10) comprises place numbering means and a longitudinal edge orientated forwardly and forming a side head rest.

8. A chair according to one of the preceding claims, **characterized in that** the strut is formed from a tubular spar which contains electrical cables and/or conduits for the passage of pressurized fluid.

9. A chair according to one of the preceding claims, **characterized in that** the strut is tubular and comprises means for circulating air by natural convection, to cool integrated electrical equipment.

## Patentansprüche

1. Sitz für öffentliches Verkehrsmittel, der eine Sitzfläche (14), eine Rückenlehne (16) und eine im wesentlichen horizontale Struktur (18) zum Halten der Sitzfläche (14) aufweist, die an einer im wesentlichen vertikalen Säule (10) befestigt ist, die am Boden (12) zu befestigen ist, sowie mindestens ein an der Säule (10) befestigtes oder mit dieser integrales Zubehörteil aufweist, **dadurch gekennzeichnet, daß** die Rückenlehne (16) von einem an der vertikalen Säule (10) befestigten, im wesentlichen horizontalen Träger (20) gehalten wird und **dadurch**, daß das an der Säule (10) befestigte oder mit dieser integrale Zubehörteil aus der Gruppe ausgewählt ist, die eine klappbare Tischplatte (24), eine Armlehne (34), eine Fußstütze (22), einen Abfallbehälter (30), ein Handschuhfach (46), Einrichtungen (42) zum Anschluß an ein elektrisches Versorgungsnetz und Einrichtungen zum Anschließen von Einrichtungen zur Übertragung von Audio- und/oder Videosignalen aufweist.

2. Sitz nach Anspruch 1, **dadurch gekennzeichnet, daß** die Struktur (18) zum Halten der Sitzfläche (14) auch eine Armlehne hält.

3. Sitz nach Anspruch 1 oder 2, **dadurch gekennzeichnet, daß** die Struktur (18) zum Halten der Sitzfläche (14) auch Einrichtungen zum Drehen und/oder Verschieben der Sitzfläche hält.

4. Sitz nach einem der Ansprüche 1 bis 3, **dadurch gekennzeichnet, daß** der Träger (20) zum Halten der Rückenlehne (16) auch ein Zubehörteil, beispielsweise eine Tischplatte (24), hält.

5. Sitz nach einem der Ansprüche 1 bis 4, **dadurch gekennzeichnet, daß** die Struktur zum Halten der Sitzfläche (14) ein horizontaler Träger (18) ist.

6. Sitz nach einem der vorstehenden Ansprüche, **dadurch gekennzeichnet, daß** er einen Doppelsitz bildet, der zwei Sitzflächen (14) und zwei Rückenlehnen (16) aufweist, die an der Säule (10) befestigt sind, die sich zentral zwischen den Sitzflächen und den Rückenlehnen erstreckt, wobei die Sitzflächen von der gleichen Haltestruktur gehalten werden, die sich symmetrisch beiderseits der Säule erstreckt, oder von zwei Haltestrukturen gehalten werden, die sich jeweils von einer Seite der Säule aus erstrecken, wobei die Rückenlehnen an einem horizontalen Träger befestigt sind, der sich beiderseits der Säule erstreckt, oder an zwei horizontalen Trägern befestigt sind, die sich jeweils von einer Seite der Säule aus erstrecken.

7. Sitz nach einem der vorstehenden Ansprüche, **dadurch gekennzeichnet, daß** der obere Teil der Säule (10) Einrichtungen zur Platznumerierung und einen Längsrand aufweist, der nach vorne orientiert ist und eine seitliche Kopfstütze bildet.

8. Sitz nach einem der vorstehenden Ansprüche, **dadurch gekennzeichnet, daß** die Säule aus einem rohrförmigen Träger besteht, der elektrische Kabel und/oder Leitungen zum Durchgang eines unter Druck stehenden Fluids enthält.

9. Sitz nach einem der vorstehenden Ansprüche, **dadurch gekennzeichnet, daß** die Säule rohrförmig ist und für die Kühlung der eingebauten elektrischen Anlagen Einrichtungen zur Zirkulation von Luft mittels natürlicher Konvektion aufweist.
